# EUROPEAN PATENT SPECIFICATION

(11) **EP 3 800 165 B1**
(45) Date of publication and mention of the grant of the patent: **27.07.2022**
(21) Application number: 20209051.0
(22) Date of filing: 28.06.2016
(51) Int. Cl.: C02F 11/10, C02F 11/18, B01J 3/00, B01J 19/18, B01J 19/24, C02F 11/00

(54) **CONTINUOUS VERTICAL REACTOR**
KONTINUIERLICHER VERTIKALER REAKTOR
RÉACTEUR VERTICAL CONTINU

(30) Priority: 29.06.2015 SE 1550903
(43) Date of publication of application: 07.04.2021
(62) Divisional of application: 16818341.6
(73) Proprietor: C-Green Technology AB, 170 63 Solna (SE)
(72) Inventor: ÖHMAN, Fredrik, 802 70 GÄVLE (SE); LUNDQVIST, Fredrik, 178 40 EKERÖ (SE); ODÉN, Erik, 182 78 STOCKSUND (SE)
(74) Representative: Kransell & Wennborg KB

(56) References cited:
- WO-A1-2015/017602
- DE-B3-102010 062 833
- US-A1- 2010 162 619
- US-A1- 2012 103 040

## Description

### TECHNICAL FIELD

The present disclosure relates to the field of sludge treatment.

### BACKGROUND

Sludge is what remains after wastewater treatment in municipal and industrial treatment plants. Municipal plants treat wastewater from cities while industrial wastewater treatment plants treat water effluents from e.g. pulp and paper mills etc. The wastewater treatment process technologies are principally the same but include specific solutions depending on e.g. influent to be treated, basic design, local prerequisites and environmental concerns. In larger plants in Sweden, the wastewater treatment process often comprises mechanical pretreatment followed by primary (settling) and secondary (aerobic) treatment steps. In some cases tertiary treatment is also applied to remove remaining problematic substances in treated water. In smaller plants one or more of these stages is/are often omitted.

All plants in use generate sludge that needs to be handled. The sludge is either taken out directly from the plant after dewatering (aerobic sludge) or first treated anaerobically for biogas production where part of the sludge is digested and the remainder is taken out as anaerobic sludge.

The exact composition of the sludge depends on the composition of the wastewater influent and the type of wastewater treatment plant. Sludge with high concentrations of organic and/or biological components is generally difficult to dewater. The water content is so high that net heating value if incinerated in a power plant is very low or even negative. Additional problems are various contaminants and pathogens, which limits the usability of the sludge in other applications.

There are several options for sludge handling today, depending on national legislation. Sludge can be landfilled, either directly or after anaerobic treatment. Agricultural applications are common where the sludge is used as fertilizer on farmland either directly or after composting where the sludge is hygienized. Incineration of the sludge is in use in several countries either directly or after drying.

The current sludge handling is costly (up to 50% of the total operating costs for a municipal wastewater treatment plant), requires large surface areas for sludge composting and hygienization and does not utilise the energy value of the sludge since it is too wet to combust efficiently without previous energy-intensive drying. It has a negative impact on the environment due to transports of large volumes of water, land-use, risks for heavy metal and organic toxin release and emissions of the strong greenhouse gas methane.

From 1960's and onwards, the Porteous process and other similar processes for heat-treating sludge to improve dewatering properties under hydrothermal carbonization conditions have been developed. Other methods, i.e. Veolia's "Exelys" and the Cambi process utilise heat treatment before anaerobic treatment of the sludge to improve the biogas yield. These processes use lower temperatures than in hydrothermal carbonization. There are also other heat treatment methods that utilise sub-critical and super-critical (SCWO) processes.

US 2010/162619 discloses production of a material and/or fuel from biomass according to a method in which the biomass is treated at a temperature of over 100 degrees centigrade and a pressure of over 5 bar for a treatment duration of at least 1 hour.

DE102010062833 discloses hydrothermal carbonization of biomass in a deep shaft reactor comprises: providing a flowable starting mixture, which comprises biomass suspended in water and optionally comprising at least one catalysts; supplying the starting mixture to a deep shaft reactor; and maintaining the downstream reducing conditions, in which the hydrothermal carbonization of the starting mixture in the descending allows biomass to form particulate carbon-rich compounds, where upstream resultant reaction mixture is added with oxygen-containing fluid.

### SUMMARY

The present inventors have realized that handling of the sludge from wastewater treatment plants have been inefficient, costly and environmentally questionable. For example, sludge from Swedish municipal wastewater treatment plants have been transported to northern Sweden and dumped into abandoned underground mines. Due to the high water content of the sludge, the costs and environmental impact of such handling are extensive. Further, the sludge from waste water treatment plants (including aerobic and anaerobic sludge) often contains pathogens and problematic metals and can possess pharmaceutical activity, which poses restrictions towards utilization in agriculture and soil-improvement applications.

The present inventors have noted that the prior art processes for heat-treatment of the sludge were associated with a number of significant problems, such as technology for heating, plugging of heat exchangers, corrosion and return of refractory organic substances to the wastewater treatment plant. For example, most of the earlier Porteous processes were closed down due to technical and economical reasons. The technical solutions and material selections were not optimal under the conditions prevailing at that time. Further, the prior art heat-treatment processes were carried out in large plants built within the wastewater treatment plants.

In the prior art methods based on sub-critical and super-critical (SCWO) conditions, oxygen is added to destroy the organic material, which results in that the heat value cannot be recovered in solid fuel. Oxygen can be supplied either from a dedicated oxygen plant or via air; both procedures add however capital and operating costs.

It is thus an object of the present disclosure to improve the handling of sludge from sewage treatment plants.

The present disclosure provides a continuous vertical reactor designed to treat pressurized aqueous sludge having a temperature of at least 150 °C, which reactor comprises a reactor top inlet arranged at a top section of the reactor, wherein:
a first channel extends downwardly from the reactor top inlet for guiding sludge from the reactor top inlet to a bottom section of the reactor;
a second channel extends upwardly from the bottom section;
at least one separation wall, which preferably is essentially vertical, separates first channel from the second channel; and
an opening through which sludge may flow from the first channel into the second channel is provided at the bottom section of the reactor,
and wherein the reactor further comprises:
at least one upper outlet arranged at the second channel to connect to a recirculation conduit for recirculation of a fraction of the heat-treated sludge, whereby the reactor is designed to allow sludge to flow from the opening through the second channel to the upper outlet; and
at least one lower outlet that can be connected to an arrangement for cooling heat-treated sludge, which at least one lower outlet is/are arranged below the at least one upper outlet.

The present disclosure further provides a container adapted to be transported by a truck, which container comprises a system for sludge treatment, which system is arranged in the container and comprises:
a sludge inlet for receiving a sludge;
a continuous vertical reactor as described above comprising an arrangement for heat treatment of the sludge, which reactor is arranged downstream the sludge inlet;
an arrangement for cooling sludge treated in the reactor, which arrangement is arranged downstream the reactor; and
a separation arrangement for separating the cooled sludge into a first fraction and a second fraction, wherein the suspended solids content is higher in the first fraction than in the second fraction.

The present disclosure also provides a method of sludge treatment, which method is carried out in a container adapted to be transported by a truck and comprises:
preheating a sludge to obtain a preheated sludge;
further heating the preheated sludge to temperature of 150-250 °C using a continuous vertical reactor as described above to obtain a heat-treated sludge;
cooling the heat-treated sludge to obtain a cooled sludge;
separating the cooled sludge into a first fraction and a second fraction, wherein the suspended solids content is higher in the first fraction than in the second fraction.

### BRIEF DESCRIPTION OF THE DRAWINGS

Fig 1 is a simplified scheme of an embodiment of a container according to the present disclosure comprising a flashing arrangement and a settling tank.
Fig 2 is a simplified scheme of another embodiment of a container according to the present disclosure comprising an arrangement for indirect heat exchange and a settling tank.
Fig 3 is a simplified scheme of another embodiment of a container according to the present disclosure comprising a flashing arrangement and a separation arrangement without a settling tank.
Fig 4 illustrates an embodiment of a vertical reactor for heat treatment of sludge.

### DETAILED DESCRIPTION

The sludge of the present disclosure may be obtained from municipal or industrial wastewater treatment plants. Accordingly, the sludge of the present disclosure may be municipal sludge or industrial sludge. Further, the sludge of the present disclosure may be anaerobic sludge or aerobic sludge.

The dry solids content (also referred to as "Total Solids") of the sludge is typically 1-35 %, such as 2-35 %, such as 3-32 %. If the sludge is anaerobic sludge, the dry solids content is normally 13-32 %. If the sludge is aerobic sludge, the dry solids content is typically 5-15 %.. The ash content is typically 15-75 %, such as 30-50 %, of the dry weight of the sludge. The higher heating value (HHV) of the sludge is typically 3.5-21 MJ/kg, such as 6-17 MJ/kg (dry weight).

The sludge composition can vary to a great degree depending on the incoming wastewater and the treatment methods applied. Industrial sludge, e.g. from the pulp and paper industry, can have compositions that differ from municipal sludge. Further, the driving forces for treatment of the sludge can be different for industrial sludges. For example, phosphorous recovery can be less interesting in case of industrial sludge.

One interesting embodiment relates to phosphorus in the sludge as the present disclosure facilitates the separation thereof. Therefore, the sludge of the present disclosure preferably comprises phosphorus (P), e.g. in an amount of 0.5-9 % of the dry weight of the sludge, such as 1-9 % of the dry weight of the sludge, such as 1.5-9 % of the dry weight of the sludge.

Further, the treated sludge can be used as a fuel. Therefore, the sludge of the present disclosure preferably comprises carbon (C), e.g. in an amount of 9-46 % of the dry weight of the sludge, such as 20-46 % of the dry weight of the sludge.

As a first aspect of the present disclosure, there is provided a system for sludge treatment, which system is arranged in at least one container. Preferably, the system is arranged in a single container.

The container of the present disclosure is preferably adapted to be transported by a truck. The container may be an optionally modified intermodal container (also known as an ISO container), which is a standardized reusable steel box. Intermodal containers are normally used to store and move materials and products efficiently and securely in the global containerized intermodal freight transport system. "Intermodal" indicates that the container can be used across various modes of transport, (from ship to rail to truck) without unloading and reloading its contents. Lengths of intermodal containers, which each have a unique ISO 6346 reporting mark, vary from 8 to 56 feet (2.438 to 17.069 m), whereas heights vary from 8 feet (2.438 m) to 9 feet 6 inches (2.896 m). A typical width is 8 feet (2.438 m).

The smallest containers normally do not provide enough space for the system of the first aspect. Accordingly, the length of the container of the present disclosure is preferably 5-18 m, such as 6-18 m, such as 9-18 m. The normal height and width can be used. Accordingly, the height of the container of the present disclosure may be 2-3 m, such as 2.4-2.9 m. Further, the width of the container of the present disclosure may be 2-3 m, such as 2.2-2.7 m.

The system comprises a sludge inlet for receiving sludge. A conduit may be arranged to conduct sludge from the sludge inlet to a silo arranged in the container for collecting sludge.

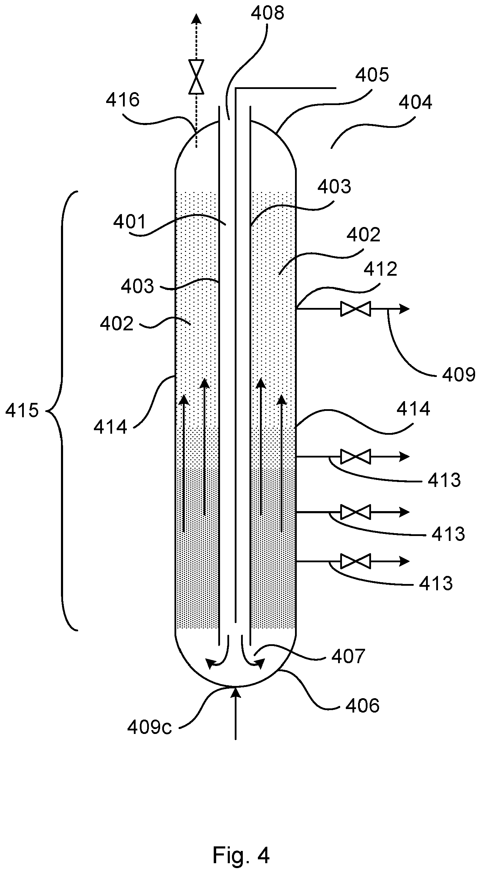

The system further comprises a reactor for heat treatment of the sludge, which reactor is arranged downstream the sludge inlet. If the silo is included, the reactor is also arranged downstream the silo. The reactor preferably comprises an electrical heating arrangement. However, it is also possible to heat the sludge in another way, such as with steam from a boiler or an external steam source. The reactor is further described below with reference to Fig. 4.

The system further comprises an arrangement for cooling sludge treated in the reactor, which arrangement is arranged downstream the reactor.

In an embodiment, the arrangement for cooling is a flashing arrangement for cooling sludge treated in the reactor and providing at least one steam fraction. In such case, the system further comprises a steam routing arrangement capable of routing the at least one steam fraction from the flashing arrangement to preheat sludge transported from the sludge inlet to the reactor.

The flashing arrangement can for example comprise at least one flash tank, such as at least two flash tanks, such as at least three flash tanks. Each flash tank normally comprises a steam outlet connected to the steam routing arrangement.

In case of at least two flash tanks, the flash tanks may be arranged in series. Accordingly, they may be arranged to provide steam fractions of different pressures.

As understood from the discussion above, the system may comprise a conduit for conducting sludge from the sludge inlet or the silo to the reactor. Accordingly, at least one pump may be arranged on the conduit. Further, a heat exchanger for preheating the sludge may be arranged on the conduit.

The conduit preferably comprises at least one steam mixer by means of which the at least one steam fraction is mixed into the sludge. If the above-mentioned heat exchanger is included, the at least one steam mixer is/are arranged downstream the heat exchanger. The at least one steam mixer may for example be at least one venturi steam mixer or at least one mechanical re-compressor with steam nozzle mixer. The former alternative is considered to be more easily implemented in the system.

In another embodiment, the arrangement for cooling sludge treated in the reactor is an arrangement for indirect heat exchange in which heat is transferred from the heat-treated sludge fraction to the sludge without direct contact. Such an arrangement for indirect heat exchange may comprise a series of indirect heat exchangers, such as two, three or four indirect heat exchangers arranged in series. Examples of indirect heat exchangers are tubular heat exchangers and plate heat exchangers.

The system further comprises a separation arrangement for separating the cooled sludge from the arrangement for cooling into a first fraction and a second fraction, wherein the suspended solids content is higher in the first fraction than in the second fraction.

The separation arrangement may for example comprise a settling arrangement, such as a settling tank and/or a solid/liquid separation unit, such as a filter press. In addition, the separation arrangement may comprise a membrane filter arranged downstream the settling tank and/or the solid/liquid separation unit. The cut-off of the membrane filter of the present disclosure is typically 1-300 kDa and preferably 3-30 kDa, such as 5-15 kDa.

The separation in a settling arrangement according to the present disclosure is based on gravity or centrifugal motion. Equipment for such separation is well known to the skilled person. The settling arrangement according to the present disclosure may be arranged to handle pressurized heat-treated sludge and generate a pressurized clear fraction. The pressure of such a clear fraction may at least partly drive a downstream membrane filtration of the clear fraction

A first configuration of the separation arrangement comprises a settling arrangement, such as a settling tank, for separating the cooled sludge from the arrangement for cooling into a clear fraction and a sediment fraction. Such a settling arrangement is arranged downstream the arrangement for cooling. A benefit of the settling arrangement is that sludge of relatively high temperature and pressure can be treated in it and that the resulting clear fraction can have a pressure that facilitates a further separation operation and a temperature that facilitates energy-efficient heat-exchange with incoming sludge.

An embodiment of the first configuration comprises a filter, such as a membrane, arranged downstream the settling arrangement for separating the clear fraction into a filtrate and a retentate. The cut-off of a membrane in this position is preferably 5-15 kDa. Such an embodiment may further comprise a conduit for recirculating the retentate to the sludge transported from the sludge inlet to the reactor. It may also comprise a heat exchanger arranged to transfer heat from the filtrate to the sludge from the sludge inlet. This heat exchanger may be the heat exchanger arranged on the conduit for preheating the sludge discussed above. A filtrate outlet connectable to the sewage treatment plant can be provided such that the filtrate can be returned.

An embodiment of the first configuration comprises a sediment separation unit, such as a filter press, arranged downstream the settling arrangement for separating the sediment fraction into a solids fraction and a liquid fraction. Such an embodiment may further comprise a conduit for merging at least part of the liquid fraction from the sediment separation unit with the clear fraction from the settling arrangement, preferably upstream the filter. High-molecular-weight organic compounds and particles of the clear fraction and the liquid fraction may thus get another chance to agglomerate in the reactor. In addition, formed refractory COD is prevented from leaving the system through the filtrate outlet. Accordingly, formed refractory COD can be prevented from reaching the wastewater treatment plant. Further, the first configuration may comprise a conduit for merging at least part of the liquid fraction from the sediment separation unit with the sediment fraction from the settling arrangement. Such a conduit may comprise a cooler to lower the temperature of the material separated in the sediment separation unit.

A second configuration of the separation arrangement comprises a solid/liquid separation unit, preferably a filter press that separates the cooled sludge from the arrangement for cooling into a solids fraction and a liquid fraction. A cooler may be arranged upstream the solid/liquid separation unit for further cooling the cooled sludge from the arrangement for cooling. For example, a cooler for cooling the cooled sludge prior to the solid/liquid separation unit may be arranged upstream the solid/liquid separation unit and downstream the flashing arrangement discussed above. Further, a conduit may be arranged to conduct the cooled sludge from the arrangement for cooling to the cooler via the heat exchanger arranged on the conduit for preheating the sludge discussed above.

In the second configuration, the heat-treated sludge from the reactor may thus be cooled in three steps: first in the arrangement for cooling, then in the heat exchanger arranged on the conduit for preheating the sludge and finally in the cooler.

The solid/liquid separation of the second configuration normally comprises a water inlet for washing water. A liquid fraction conduit may be arranged to conduct the liquid fraction from the solid/liquid separation unit to a membrane filter unit for separating the liquid fraction into a filtrate and a retentate. The liquid fraction conduit may comprise a pump to drive the separation in the membrane filter unit. A retentate conduit may be arranged to recirculate the retentate such that it is combined with the sludge upstream the reactor. Further, a filtrate conduit may be arranged to conduct the filtrate from the membrane filter unit to a filtrate outlet, which may be connectable to the sewage treatment plant such that the filtrate can be returned.

The reactor of the first aspect is a continuous reactor. Further, the reactor is a vertical reactor. In one embodiment, the vertical reactor extends through an opening in an upper wall of the container in an operation mode. Further, vertical reactor may be arranged such that it has a generally horizontal orientation in a transportation mode. Accordingly, the vertical reactor can be raised to penetrate the opening in the upper wall of the container on site, e.g. after transport to the site. For example, the vertical reactor may be hingedly attached to the container to allow it to be raised from a transport position to an operation position.

In one embodiment, the reactor comprises at least one outlet connected to the arrangement for cooling and at least one recirculation conduit on which the electrical heating arrangement is arranged. In such an embodiment, the reactor may be adapted to provide an outlet fraction for leaving the reactor through the at least one outlet connected to the arrangement for cooling (e.g. the flashing arrangement) and a recirculation fraction for recirculation in the recirculation conduit, wherein the average particle size is larger in the outlet fraction than in the recirculation fraction.

As mentioned above, the reactor is the reactor described below with reference to figure 4.

The system according to any one of the preceding claims may further comprise a phosphorous separation unit for separating phosphorous from the first fraction, the sediment fraction or the solids fraction. However, such a phosphorous separation unit may also be a separate unit arranged outside the container.

As a second aspect of the present disclosure, there is provided a method of sludge treatment. The method, which preferably is a continuous method, is carried out in at least one container, preferably in one container only. Further, the method can be carried out in the system of the first aspect.

The method comprises preheating a sludge to obtain a preheated sludge. The temperature of the preheated sludge may for example be at least 90 °C, such as 90-150 °C. In one embodiment, the preheating comprises the addition of at least one steam fraction to the sludge. The at least one steam fraction is further discussed below. In another embodiment, the preheating comprises indirect heat exchanging (which is also discussed below).

The method further comprises heating the preheated sludge to temperature of 150-250 °C to obtain a heat-treated sludge. Preferably, the preheated sludge is heated to a temperature of 150-220 °C, 170-250 °C or 170-240 °C. At such temperatures, the pressure of the sludge is typically 3-50 bar. Electrical heating, heating with steam or another heating method can be used. Electrical heating is preferred.

The method further comprises cooling the heat-treated sludge to obtain cooled sludge.

In one embodiment, the cooling is flash cooling such that the at least one steam fraction used for the preheating is obtained in addition to the cooled sludge.

In another embodiment, the cooling is indirect heat exchanging to achieve said preheating. Thus, heat may be transferred from heat-treated sludge from the heating step to sludge going to the heating step by means of indirect heat-exchangers.

The method further comprises separating the cooled sludge into a first fraction and a second fraction, wherein the suspended solids content is higher in the first fraction than in the second fraction.

Even though the embodiments of the first aspect discussed above apply *mutatis mutandis* to the second aspect, a few embodiments of the second aspect are discussed below in some detail.

Thus, in one embodiment of the second aspect, the preheated sludge is further heated in a reactor in which the sludge is separated into a recirculation fraction that is recirculated to the reactor and an outlet fraction that is subjected to cooling (e.g. flash cooling). In such an embodiment, the average particle size is preferably larger in the outlet fraction than in the recirculation fraction. To achieve such a separation based on particle size, the separation in the reactor may comprise fluidization or sedimentation of particles of the sludge.

The reactor is a vertical reactor (further described below with reference to Fig. 4). When such a reactor is used, the sludge can be fed to an inlet at the top of the reactor and guided downwardly through a first channel in the reactor and then upwardly through a second channel in the reactor. Further, the recirculation fraction can be withdrawn from the reactor at a position that is located higher up in the second channel than a position at which the outlet fraction is withdrawn.

When the cooling is flash cooling, at least two, such as at least three steam fractions of different temperatures can be obtained and used sequentially in the preheating. Accordingly, the sludge can be first preheated with the steam fraction of the lowest temperature.

The separation of the cooled sludge into a first fraction and a second fraction may for example comprise settling and/or filter pressing. In addition, the separation may comprise membrane filtration.

In one embodiment, the separation comprises settling to obtain a clear fraction and a sediment fraction. In such an embodiment, the clear fraction may be subjected to filtering, such as membrane filtering, to obtain a filtrate and a retentate. The retentate can for example be recirculated such that it is combined with the sludge and heat-treated. Further, the filtrate can for example be used for heating the sludge upstream of the preheating in a heat exchange operation. The sludge can thus be heated first by the filtrate and then by the at least one steam fraction or the indirect heat exchanging on its way to the reactor. The sediment fraction from the settling can for example be separated into a solids fraction and a liquid fraction, preferably by means of a filter press. At least part of the liquid fraction can then be merged with the clear fraction from the settling and thus subjected to the filtering. At least part of the liquid fraction can also be merged with the sediment fraction.

In another embodiment (corresponding to the second configuration of the separation arrangement of the first aspect), the separation comprises separation of the cooled sludge by filtering, such as filter pressing (without prior settling) into a solids fraction and a liquid fraction. The cooled sludge may be subjected to additional cooling before such filtering. Such additional cooling may be carried out in a cooler. Alternatively or complementary, the cooled sludge may be further cooled by heat exchange with the incoming sludge prior to the preheating. The liquid fraction may be subjected to membrane filtering such that a filtrate and a retentate are obtained. The retentate may be recycled and thereby combined with the sludge prior to the further heating and preferably also prior to the preheating.

One embodiment of the method further comprises separation of phosphorus from the first fraction, the sediment fraction or the solids fraction. However, such separation may also be carried out outside the container in a method separate from the method of the second aspect.

### EXAMPLES

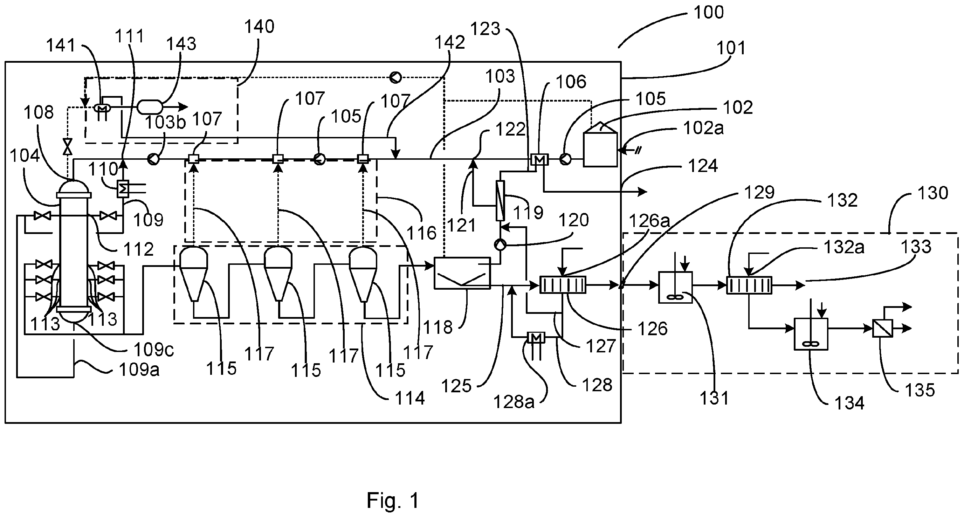

Figure 1 illustrates an embodiment of a container 100 for treatment of sludge from a sewage treatment plant. As all standardized containers, the container 100 has a housing 101 comprising a horizontal bottom wall, a horizontal top wall and two pairs of opposed vertical side walls. The walls are normally composed of steel. Further, the container 100 is adapted to be loaded on and off a truck capable of transporting the container 100. For example, the container 100 can be conveniently transported from the site where it is produced/assembled to the site of the sewage treatment plant. Consequently, the container format enables standardized production/assembly. Further, the container 100 can be conveniently picked up at the site of the sewage treatment plant for service, if necessary. In such case, the truck picking up the container 100 can bring a replacement container 100, which minimizes the interruption of operation.

The container 100 comprises a sludge inlet 102a. It may for example be arranged in the housing 101. The sludge inlet 102a is connectable to a sludge outlet of the sewage treatment plant. Inside the housing 101 of the container 100, a sludge silo 102 is arranged to collect sludge fed to the container 100 from the sewage treatment plant via the sludge inlet 102a. The sludge silo 102 is connected to a conduit 103 for conducting sludge from the sludge silo 102 to a vertical reactor 104 (more details of the vertical reactor is described below with reference to figure 4).

At least one pump 105 is arranged on the conduit 103. Further, a heat exchanger 106 for preheating the sludge may be arranged on the conduit 103. The conduit 103 comprises at least one steam mixer 107 by means of which at least one steam fraction is mixed into the sludge to (further) preheat it. If the heat exchanger 106 is included, the at least one steam mixer 107 is/are arranged downstream the heat exchanger 106. The at least one steam mixer 107 may for example be at least one venturi steam mixer or at least one mechanical re-compressor with steam nozzle mixer. The former alternative is considered to be more easily implemented in the system. The temperature of the sludge after the at least one steam mixer is preferably at least 90 °C, such as 90-150 °C.

A booster pump 103b may be arranged on the conduit 103 between the at least one steam mixer 107 and the vertical reactor 104. The effect of such a pump 103b may be to further increase the pressure in the conduit to overcome the higher pressure in the reactor.

At the top of the vertical reactor 104, a reactor top inlet 108 is arranged. The conduit 103 connects to the reactor top inlet 108. The vertical reactor 104 further comprises a recirculation conduit 109 on which an electrical heater 110 is arranged. However, the electrical heater can be omitted if the composition of the sludge and the conditions in the reactor are such that exothermic reactions provide sufficient heat. The downstream end of the conduit 103 and the reactor top inlet 108 can be part of the recirculation conduit 109. Accordingly, the conduit 103 may comprise a recirculation conduit inlet 111 arranged downstream the at least one steam mixer 107.

In the vertical reactor 104, the sludge is heat-treated, preferably under hydrothermal carbonization conditions, which means that no oxygen is added and that the temperature is 150-250 °C, preferably 170-240 °C. During the heat treatment, particles in the sludge agglomerate to form larger particles, which agglomeration facilitates downstream separation of suspended solids. The vertical reactor 104 comprises a recirculation conduit outlet 112 through which a recirculation fraction is led from the vertical reactor 104 into the recirculation conduit 109. The vertical reactor 104 further comprises at least one reactor sludge outlet 113 through which a heat-treated sludge fraction (also referred to as an "outlet fraction") is fed to a flashing arrangement 114. The recirculation conduit outlet 112 is preferably arranged above the at least one sludge outlet 113. In such case, fluidization or sedimentation principles can be utilized such that the average particle is larger in the heat-treated sludge fraction than in the recirculation fraction. Further, the smaller particles of the recirculation fraction pass the vertical reactor 104 again and get another chance to agglomerate. Further, refractory components in the recirculation fraction are recycled to the reactor 104, which decreases their concentrations in the outlet fraction.

The recirculation conduit may comprise a bottom feed conduit 109a, which connects to a reactor bottom inlet 109c arranged at the bottom of the vertical reactor 104. When such a bottom feed conduit 109a is included, it routes at least part of the recirculation fraction to the bottom of the vertical reactor 104, which may improve fluidization in the vertical reactor.

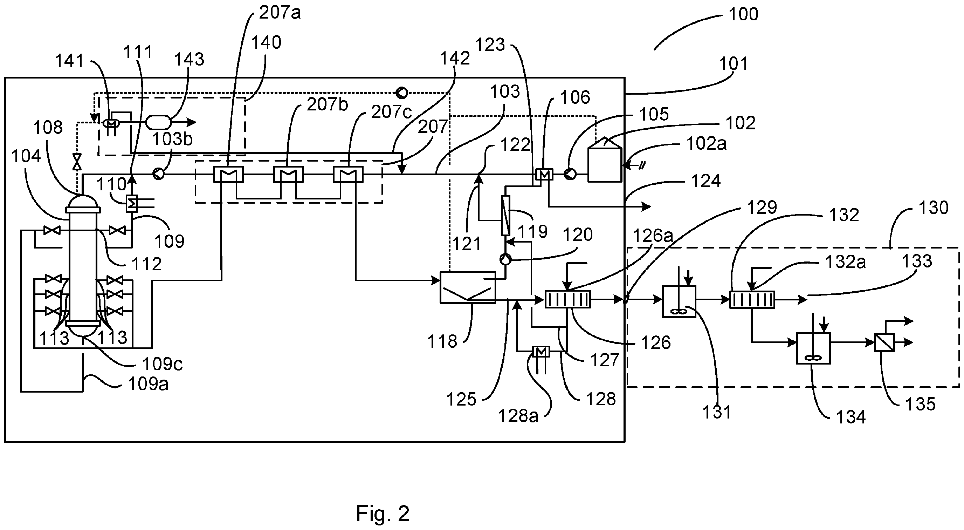

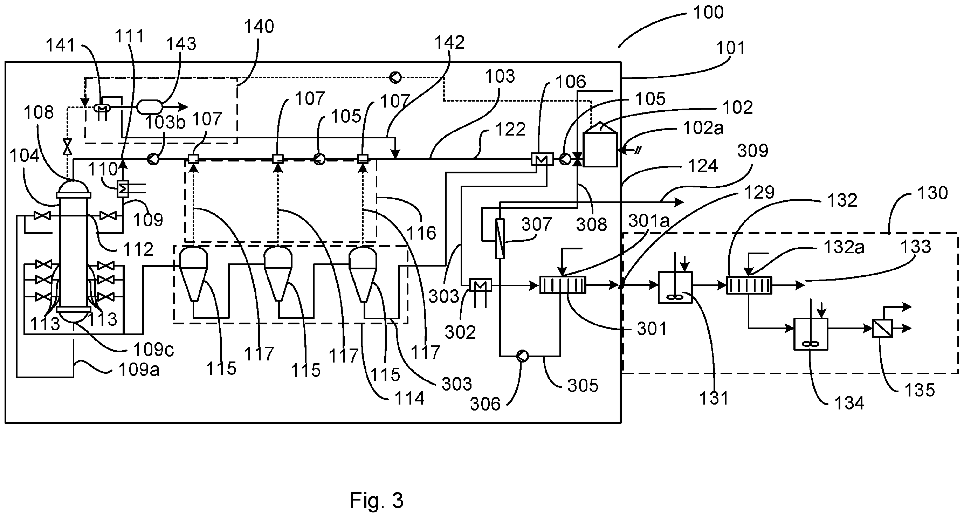

It is possible to replace the vertical reactor 104 with another reactor that is also capable of heat-treating the sludge under hydrothermal carbonization conditions. The embodiment of figure 1 as well as the embodiments of figures 2 and 3 discussed below are thus not necessarily limited to the vertical reactor 104 discussed above.

The flashing arrangement 114 preferably comprises at least one flash tank 115 in which the heat-treated sludge is cooled by a pressure reduction also known as "flashing" and the at least one steam fraction added to the sludge in the at least one steam mixer 107 is/are produced. When the flashing arrangement 114 comprises more than one flash tank 115, they are preferably arranged in series (figure 1 shows three flash tanks 115 arranged in series).

The container further comprises a steam routing arrangement 116 for routing the at least one steam fraction from the flashing arrangement 114 to the at least one steam mixer 107. Preferably, the steam routing arrangement 116 comprises at least one steam conduit 117, wherein each steam conduit 117 connects a flash tank 115 to a steam mixer 107. In such case, a steam conduit 117 can connect the flash tank 115 arranged furthest upstream to the steam mixer 107 arranged furthest downstream and another steam conduit 117 can connect the flash tank 115 arranged furthest downstream to the steam mixer 107 arranged furthest upstream. Thereby, an efficient preheating sequence is obtained.

A settling tank 118 for separating the cooled sludge from the flashing arrangement 114 into a clear fraction and a sediment fraction is arranged downstream the flashing arrangement 114. The settling tank 118 can be pressurized, which means that the pressure of the cooled sludge from the flashing arrangement 114 is still above atmospheric when it reaches the settling tank. A membrane filter unit 119 can be arranged downstream the settling tank 118 for separating the clear fraction into a filtrate and a retentate. The membrane filter unit 119 can comprise a pump 120 for driving the separation. If the settling tank is pressurized, the energy input in the pump 120 can be reduced. If the pressure in the settling tank 118 is high enough, the pump 120 can be omitted.

A retentate conduit 121 may be arranged to recirculate the retentate to a retentate inlet 122 on the conduit 103. Thereby, the retentate may be combined with untreated sludge and heat-treated again, which means that high-molecular-weight organic compounds and small particles of the retentate, which are relatively small, can get another chance to agglomerate. Combining the retentate with the untreated sludge may thus increase the overall yield of solid material and reduce the amount of COD leaving the system. Further, a filtrate conduit 123 may be arranged to conduct the filtrate from the membrane filter unit 119 to the heat exchanger 106, in which it preheats the incoming sludge. A filtrate outlet 124 may be arranged downstream the heat exchanger 106. The filtrate outlet 124 may be connectable to the sewage treatment plant such that the filtrate can be returned.

A sediment conduit 125 may be arranged to conduct the sediment fraction from the settling tank 118 to a solid/liquid separation unit, preferably a filter press 126, that separates the sediment fraction into a solids fraction and a liquid fraction. The filter press 126 normally comprises a water inlet 126a for washing water. A first liquid fraction conduit 127 may be arranged to merge a first part of the liquid fraction from the filter press 126 with the clear fraction from the settling tank 118. If the membrane filter unit 119 is included, said first part of the liquid fraction and the clear fraction are merged upstream of it. A second part of the liquid fraction from the filter press 126 may be recirculated. For example, a second liquid fraction conduit 128 may be arranged to merge the second liquid fraction with the sediment fraction from the settling tank 118. Such a second liquid fraction conduit 128 may comprise a cooler 128a for cooling the second liquid fraction.

The settling tank 118, membrane filter unit 119, the filter press 126 and the associated conduits together forms an embodiment of a separation arrangement for separating the cooled sludge from the flashing arrangement 114 into a first fraction (in this embodiment the solids fraction from the filter press 126) and a second fraction (in this embodiment the filtrate from the membrane filter unit 119), wherein the suspended solids content is higher in the first fraction than in the second fraction.

A solids fraction outlet 129 may be arranged downstream the filter press 126. The solids fraction from the solids fraction outlet 129 may be further treated in a phosphorus separation unit 130. If the filter press 126 is not included, the sediment fraction from the settling tank 118 can be further treated in the phosphorus separation unit 130.

The phosphorus separation unit 130 can be arranged inside the housing 101 of the container 100. Due to the limited space available in the container 100, it may however be preferred that the phosphorus separation unit 130 is separate from the container 100.

In any case, the phosphorous separation unit 130 may comprise a first mixing unit 131, such as a stirred tank, for mixing the solids fraction with acid and optionally with water to obtain an acidified product that preferably has a pH of 3-4, at which phosphorous is dissolved together with part of the heavy metal content of the incoming solids fraction. The mixing unit 131 may thus comprise a water inlet and an acid inlet. The water inlet and the acid inlet may be the same inlet or two different inlets. The phosphorous separation unit 130 further comprises a first separation unit 132, such as a filter press, arranged downstream the mixing unit 131. The function of the first separation unit 132 is separation of the acidified product into a fuel fraction and acidified liquid fraction comprising dissolved phosphates. The first separation unit 132 can alternatively be the same filter press as unit 126 and operate by alternatively dewatering and washing the sediment fraction and outlet from the stirred tank 131. The fuel fraction is recovered from the phosphorous separation unit 130 through a fuel fraction outlet 133. The first separation unit 132 may comprise a water inlet 132a for washing water. A second mixing unit 134, such as a stirred tank, is arranged downstream the first separation unit 132. In the second mixing unit 134, lime can be added to the acidified liquid fraction such that a neutralized slurry comprising precipitated phosphates is obtained. To separate the neutralized slurry into a solids fraction comprising precipitated phosphates and a liquid effluent fraction, a second separation unit 135 is arranged downstream the second mixing unit 134. The liquid effluent fraction can for example be returned to the sewage treatment plant and/or treated further for separate removal of dissolved heavy metals. The solids fraction comprising precipitated phosphates can, optionally after refining, be used in the production of a fertilizer.

A gas treatment unit 140 may be arranged in the container 100 and one or more conduits may be arranged to conduct gases from the sludge silo 102, the vertical reactor 113 and/or the settling tank 118 to the gas treatment unit 140. The gas treatment unit 140 may for example comprise a condenser 141 for separating gases into a condensed fraction and a gaseous fraction. A condensed fraction conduit 142 may be arranged to recirculate the condensed fraction from the condenser 141 to the conduit 103. The condensed fraction can thus be mixed with the incoming sludge. The gas treatment unit 140 may further comprise a carbon filter 143 arranged downstream the condenser to purify the gaseous fraction. Another means for removing trace hydrocarbons can be used instead of the carbon filter.

Figure 2 illustrates another embodiment of a container 100 for treatment of sludge from a sewage treatment plant. In the embodiment of figure 2, the at least one steam mixer 107, the flashing arrangement 114 and the steam routing arrangement 116 of the embodiment of figure 1 are replaced with an arrangement 207 for indirect heat exchange. Otherwise, the components of the embodiment of figure 2 are as in the embodiment of figure 1. In the arrangement 207 for indirect heat exchange, heat is transferred from the heat-treated sludge fraction to the sludge in the conduit 103 without direct contact. The heat-treated sludge is thus kept separate from the sludge conducted in the conduit 103.

The arrangement 207 for indirect heat exchange may comprise a series of indirect heat exchangers 207a, 207b, 207c, which may be selected from tubular heat exchangers and plate heat exchangers.

Figure 3 illustrates another embodiment of a container 100 for treatment of sludge from a sewage treatment plant. In the embodiment of figure 3, the separation arrangement for separating the cooled sludge from the flashing arrangement 114 into the first fraction and the second fraction (wherein the suspended solids content is higher in the first fraction than in the second fraction) is different compared to the embodiment of figure 1. Otherwise, the components of the embodiment of figure 3 are as in the embodiment of figure 1.

In the embodiment of figure 3, the separation arrangement comprises a solid/liquid separation unit 301, preferably a filter press, that separates the cooled sludge from the flashing arrangement 114 into a solids fraction and a liquid fraction. Before the solid/liquid separation unit 301, the cooled sludge may be subjected to further cooling. For example, a cooler 302 for cooling the cooled sludge prior to the solid/liquid separation unit 301 may be arranged upstream the solid/liquid separation unit 301 and downstream the flashing arrangement 114. Further, a conduit 303 for the cooled sludge may be arranged to conduct the cooled sludge from the flashing arrangement 114 to the cooler 302 via the heat exchanger 106. The sludge from the reactor 104 may thus be cooled in three steps: first in the flashing arrangement 114 (which may comprise several flashing stages), then in the heat exchanger 106 and finally in the cooler 302.

The solid/liquid separation unit 301 normally comprises a water inlet 301a for washing water. A liquid fraction conduit 305 may be arranged to conduct the liquid fraction from the solid/liquid separation unit 301 to a membrane filter unit 307 for separating the liquid fraction into a filtrate and a retentate. The liquid fraction conduit may comprise a pump 306 to drive the separation in the membrane filter unit 307. A retentate conduit 308 may be arranged to recirculate the retentate to a retentate inlet on the conduit 103. Thereby, the retentate may be combined with untreated sludge and heat-treated again, which means that high-molecular-weight organic compounds and small particles of the retentate, which are relatively small, can get another chance to agglomerate. Combining the retentate with the untreated sludge may thus increase the overall yield of solid material. Further, a filtrate conduit 309 may be arranged to conduct the filtrate from the membrane filter unit 307 to a filtrate outlet 124, which may be connectable to the sewage treatment plant such that the filtrate can be returned.

Figure 4 illustrates an embodiment of a continuous vertical reactor 404, which is designed to treat pressurized aqueous sludge having a temperature of at least 150 °C. Preferably, the reactor is designed to treat such sludge having a temperature of 200-250 °C and a pressure of 15-50 bar.

The reactor 404 comprises a reactor top inlet 408 arranged at a top section 405 of the reactor 404. A first channel 401 extends downwardly from the reactor top inlet 408 for guiding sludge from the reactor top inlet 408 to a bottom section 406 of the reactor 404. Further, a second channel 402 extends upwardly from the bottom section 406. At least one separation wall 403, which preferably is essentially vertical, separates first channel 401 from the second channel 402. At the bottom section 406 of the reactor 404, there is provided an opening 407 through which sludge may flow from the first channel 401 into the second channel 402.

The reactor 404 comprises at least one upper outlet 412 arranged at the second channel 402 to connect to a recirculation conduit 409 for recirculation of a fraction of the heat-treated sludge (a "recirculation fraction"). The reactor 404 is thus designed to allow sludge to flow from the opening 407 through the second channel 402 to the upper outlet 412. The recirculation conduit 409 preferably comprises a heater, such as an electrical heater, for heating the recirculation fraction.

The reactor 404 further comprises at least one lower outlet 413 that can be connected to an arrangement for cooling heat-treated sludge, such as the flashing arrangement 114 of figure 1 and 3 or the arrangement 207 for indirect heat exchange of figure 2.

The at least one lower outlet 413 is/are arranged below the at least one upper outlet 412. Consequently, the average particle size will be larger in the heat-treated sludge that leaves the reactor 404 through the at least one lower outlet 413 than in the recirculation fraction in the recirculation conduit 409. The reason for the difference in particle size is the fluidization obtained in the second channel 402. To aid the fluidization, the reactor 404 may comprise a bottom inlet 409c arranged at the bottom section 406 of the reactor 404. The bottom inlet 409c can for example be connected to the recirculation conduit 409 such that part of the recirculation fraction can be recirculated to the bottom inlet 409c.

The reactor 404 may comprise an outer wall 414 which is also an outer wall of the second channel 402. Further, the separation wall 403 may constitute an inner wall of the second channel 402 and an outer wall of the first channel 401. For example, the separation wall 403 maybe a pipe extending downwardly from the reactor top inlet 408 to the bottom section 406 of the reactor 404. Such a pipe may have an essentially circular cross-section. Further, the outer wall 414 may comprise a tubular section 415 having an essentially circular cross-section. In such case, the pipe and the tubular section 415 may be concentric. In one embodiment, the outer wall has three major sections: the tubular section 415; a bottom wall section below the tubular section 415 at the bottom section 406 of the reactor 404; and a top wall section above the tubular section 415 at the top section 405 of the reactor 404. The bottom wall section and/or the top wall section may for example be shaped as a cone, a truncated cone or a half sphere.

A gas outlet 416 may be arranged at a top section 405 of the reactor 404 to allow gases formed in the reactor to be purged.

## Claims

1. A continuous vertical reactor (404) designed to treat pressurized aqueous sludge having a temperature of at least 150 °C, which reactor (404) comprises a reactor top inlet (408) arranged at a top section (405) of the reactor (404), wherein:
a first channel (401) extends downwardly from the reactor top inlet (408) for guiding sludge from the reactor top inlet (408) to a bottom section (406) of the reactor (404);
a second channel (402) extends upwardly from the bottom section (406);
at least one separation wall (403), which preferably is essentially vertical, separates first channel (401) from the second channel (402); and
an opening (407) through which sludge may flow from the first channel (401) into the second channel (402) is provided at the bottom section (406) of the reactor (404),
and wherein the reactor (404) further comprises:
at least one upper outlet (412) arranged at the second channel (402) to connect to a recirculation conduit (409) for recirculation of a fraction of the heat-treated sludge, whereby the reactor (404) is designed to allow sludge to flow from the opening (407) through the second channel (402) to the upper outlet (412); and
at least one lower outlet (413) that can be connected to an arrangement for cooling heat-treated sludge, which at least one lower outlet (413) is/are arranged below the at least one upper outlet (412).

2. The reactor (404) of claim 1 further comprising a bottom inlet (409c) arranged at the bottom section (406) of the reactor (404).

3. The reactor (404) of claim 2, wherein the bottom inlet (409c) is connected to the recirculation conduit (409) such that part of the fraction of the heat-treated sludge can be recirculated to the bottom inlet (409c).

4. The reactor (404) of any one of the preceding claims, wherein the separation wall (403) constitutes an inner wall of the second channel (402) and an outer wall of the first channel (401).

5. The reactor (404) of any one of the preceding claims, wherein the separation wall (403) is a pipe extending downwardly from the reactor top inlet (408) to the bottom section (406) of the reactor (404).

6. The reactor (404) of claim 5, wherein the pipe has an essentially circular cross-section.

7. The reactor (404) of any one of the preceding claims, further comprising an outer wall (414) which is also an outer wall of the second channel (402).

8. The reactor (404) of claim 7, wherein the outer wall (414) comprises a tubular section (415) having an essentially circular cross-section.

9. The reactor (404) of claim 8 comprising a pipe according to claim 5 or 6, wherein the pipe and the tubular section (415) are concentric.

10. The reactor (404) of claim 8 or 9, wherein the outer wall has three major sections: the tubular section (415); a bottom wall section below the tubular section (415) at the bottom section (406) of the reactor (404); and a top wall section above the tubular section (415) at the top section (405) of the reactor (404).

11. The reactor (404) of claim 10, wherein the bottom wall section and/or the top wall section is/are shaped as a cone, a truncated cone or a half sphere.

12. The reactor (404) of any one of the preceding claims, further comprising a gas outlet (416) arranged at the top section (405) of the reactor (404) to allow gases formed in the reactor to be purged.

13. The reactor (404) of any one of the preceding claims reactor, which is designed to treat such sludge having a temperature of 200-250 °C and a pressure of 15-50 bar.

14. A container adapted to be transported by a truck, which container comprises a system (100) for sludge treatment, which system is arranged in the container and comprises:
a sludge inlet (102a) for receiving a sludge;
a continuous vertical reactor (404) according to any one of claims 1-13 comprising an arrangement (110) for heat treatment of the sludge, which reactor (404) is arranged downstream the sludge inlet (102a);
an arrangement (114, 207) for cooling sludge treated in the reactor, which arrangement (114, 207) is arranged downstream the reactor (404); and
a separation arrangement for separating the cooled sludge into a first fraction and a second fraction, wherein the suspended solids content is higher in the first fraction than in the second fraction.

15. A method of sludge treatment, which method is carried out in a container adapted to be transported by a truck and comprises:
preheating a sludge to obtain a preheated sludge;
further heating the preheated sludge to temperature of 150-250 °C using a continuous vertical reactor (404) according to claim 1 to obtain a heat-treated sludge;
cooling the heat-treated sludge to obtain a cooled sludge;
separating the cooled sludge into a first fraction and a second fraction, wherein the suspended solids content is higher in the first fraction than in the second fraction.

## Patentansprüche

1. Kontinuierlicher vertikaler Reaktor (404), der ausgelegt ist, mit Druck beaufschlagten wässrigen Schlamm, der eine Temperatur von wenigstens 150 °C hat, zu behandeln, wobei der Reaktor (404) einen oberen Reaktoreinlass (408) aufweist, der an einem oberen Abschnitt (405) des Reaktors (404) angeordnet ist, wobei:
ein erster Kanal (401) vom oberen Reaktoreinlass (408) abwärts verläuft, um Schlamm vom oberen Reaktoreinlass (408) zu einem Bodenabschnitt (406) des Reaktors (404) zu leiten;
ein zweiter Kanal (402) vom Bodenabschnitt (406) nach oben verläuft;
wenigstens eine Trennwand (403), die vorzugsweise im Wesentlichen vertikal ist, den ersten Kanal (401) vom zweiten Kanal (402) trennt; und
eine Öffnung (407), durch die Schlamm vom ersten Kanal (401) in den zweiten Kanal (402) strömen kann, am Bodenabschnitt (406) des Reaktors (404) vorgesehen ist, wobei der Reaktor (404) ferner Folgendes umfasst:
wenigstens einen oberen Auslass (412), der am zweiten Kanal (402) angeordnet ist, zum Verbinden mit einer Rückführleitung (409) für eine Rückführung einer Fraktion des wärmebehandelten Schlamms, wobei der Reaktor (404) so ausgelegt ist, dass Schlamm von der Öffnung (407) durch den zweiten Kanal (402) zum oberen Auslass (412) strömen kann; und
wenigstens einen unteren Auslass (413), der mit einer Anordnung zum Abkühlen des wärmebehandelten Schlamms verbunden werden kann, wobei der wenigstens eine untere Auslass (413) unter dem wenigstens einen oberen Auslass (412) angeordnet ist.

2. Reaktor (404) nach Anspruch 1, der ferner einen Bodeneinlass (409c) umfasst, der am Bodenabschnitt (406) des Reaktors (404) angeordnet ist.

3. Reaktor (404) nach Anspruch 2, wobei der Bodeneinlass (409c) so mit der Rückführleitung (409) verbunden ist, dass ein Teil der Fraktion des wärmebehandelten Schlamms zum Bodeneinlass (409c) rückgeführt werden kann.

4. Reaktor (404) nach einem der vorhergehenden Ansprüche, wobei die Trennwand (403) eine Innenwand des zweiten Kanals (402) und eine Außenwand des ersten Kanals (401) bildet.

5. Reaktor (404) nach einem der vorhergehenden Ansprüche, wobei die Trennwand (403) ein Rohr ist, das vom oberen Reaktoreinlass (408) nach unten zum Bodenabschnitt (406) des Reaktors (404) verläuft.

6. Reaktor (404) nach Anspruch 5, wobei das Rohr einen im Wesentlichen kreisförmigen Querschnitt hat.

7. Reaktor (404) nach einem der vorhergehenden Ansprüche, der ferner eine Außenwand (414) umfasst, die auch eine Außenwand des zweiten Kanals (402) ist.

8. Reaktor (404) nach Anspruch 7, wobei die Außenwand (414) einen rohrförmigen Abschnitt (415) umfasst, der einen im Wesentlichen kreisförmigen Querschnitt hat.

9. Reaktor (404) nach Anspruch 8, der ein Rohr nach Anspruch 5 oder 6 umfasst, wobei das Rohr und der rohrförmige Abschnitt (415) konzentrisch sind.

10. Reaktor (404) nach Anspruch 8 oder 9, wobei die Außenwand drei Hauptabschnitte aufweist: den rohrförmigen Abschnitt (415); einen unteren Wandabschnitt unter dem rohrförmigen Abschnitt (415) am Bodenabschnitt (406) des Reaktors (404); und einen oberen Wandabschnitt über dem rohrförmigen Abschnitt (415) am oberen Abschnitt (405) des Reaktors (404).

11. Reaktor (404) nach Anspruch 10, wobei der untere Wandabschnitt und/oder der obere Wandabschnitt als ein Kegel, ein Kegelstumpf oder eine Halbkugel ausgebildet ist.

12. Reaktor (404) nach einem der vorhergehenden Ansprüche, der ferner einen Gasauslass (416) umfasst, der am oberen Abschnitt (405) des Reaktors (404) angeordnet ist, damit Gase, die im Reaktor gebildet werden, abgelassen werden können.

13. Reaktor (404) nach einem der vorhergehenden Ansprüche, der ausgelegt ist, Schlamm zu behandeln, der eine Temperatur von 200-250 °C und einen Druck von 15-50 bar hat.

14. Behälter, der so ausgelegt ist, dass er von einem Lastkraftwagen transportiert werden kann, wobei der Behälter ein System (100) zur Schlammbehandlung umfasst, wobei das System im Behälter angeordnet ist und Folgendes umfasst:
einen Schlammeinlass (102a) zum Aufnehmen eines Schlamms;
einen kontinuierlichen vertikalen Reaktor (404) nach einem der Ansprüche 1-13, der eine Anordnung (110) zur Wärmebehandlung des Schlamms umfasst, wobei der Reaktor (404) stromabwärts des Schlammeinlasses (102a) angeordnet ist;
eine Anordnung (114, 207) zum Abkühlen von Schlamm, der im Reaktor behandelt wurde, wobei die Anordnung (114, 207) stromabwärts des Reaktors (404) angeordnet ist; und
eine Trennanordnung zum Trennen des abgekühlten Schlamms in eine erste Fraktion und eine zweite Fraktion, wobei der Feststoffgehalt in der ersten Fraktion höher als in der zweiten Fraktion ist.

15. Verfahren zum Behandeln von Schlamm, wobei das Verfahren in einem Behälter ausgeführt wird, der so ausgelegt ist, dass er von einem Lastkraftwagen transportiert werden kann, und wobei das Verfahren die folgenden Schritte umfasst:
Vorheizen eines Schlamms, um einen vorgeheizten Schlamm zu erhalten;
Weiterheizen des vorgeheizten Schlamms auf eine Temperatur von 150-250 °C unter Verwendung eines kontinuierlichen vertikalen Reaktors (404) nach Anspruch 1, um einen wärmebehandelten Schlamm zu erhalten;
Abkühlen des wärmebehandelten Schlamms, um einen abgekühlten Schlamm zu erhalten;
Trennen des abgekühlten Schlamms in eine erste Fraktion und eine zweite Fraktion, wobei der Feststoffgehalt in der ersten Fraktion höher als in der zweiten Fraktion ist.

## Revendications

1. Réacteur vertical continu (404) conçu pour traiter de la boue aqueuse sous pression ayant une température d'au moins 150 °C, lequel réacteur (404) comprend une entrée supérieure de réacteur (408) disposée au niveau d'une section supérieure (405) du réacteur (404), dans lequel :
un premier canal (401) s'étend vers le bas depuis l'entrée supérieure de réacteur (408) pour guider de la boue depuis l'entrée supérieure de réacteur (408) jusqu'à une section inférieure (406) du réacteur (404) ;
un deuxième canal (402) s'étend vers le haut depuis la section inférieure (406) ;
au moins une paroi de séparation (403), qui de préférence est essentiellement verticale, sépare le premier canal (401) du deuxième canal (402) ; et
une ouverture (407) à travers laquelle de la boue peut circuler depuis le premier canal (401) jusqu'à l'intérieur du deuxième canal (402) est disposée au niveau de la section inférieure (406) du réacteur (404),
et le réacteur (404) comprenant en outre :
au moins une sortie supérieure (412) disposée au niveau du deuxième canal (402) pour se raccorder à une conduite de recyclage (409) pour le recyclage d'une fraction de la boue traitée thermiquement, le réacteur (404) étant conçu pour que de la boue puisse circuler depuis l'ouverture (407) à travers le deuxième canal (402) jusqu'à la sortie supérieure (412) ; et
au moins une sortie inférieure (413) qui peut être raccordée à un agencement destiné à refroidir de la boue traitée thermiquement, laquelle au moins une sortie inférieure (413) est/sont disposée(s) au-dessous de l'au moins une sortie supérieure (412).

2. Réacteur (404) de la revendication 1 comprenant en outre une entrée inférieure (409c) disposée au niveau de la section inférieure (406) du réacteur (404).

3. Réacteur (404) de la revendication 2, dans lequel l'entrée inférieure (409c) est raccordée à la conduite de recyclage (409) de telle sorte qu'une partie de la fraction de la boue traitée thermiquement peut être recyclée jusqu'à l'entrée inférieure (409c).

4. Réacteur (404) de l'une quelconque des revendications précédentes, dans lequel la paroi de séparation (403) constitue une paroi interne du deuxième canal (402) et une paroi externe du premier canal (401).

5. Réacteur (404) de l'une quelconque des revendications précédentes, dans lequel la paroi de séparation (403) est un tuyau s'étendant vers le bas depuis l'entrée supérieure de réacteur (408) jusqu'à la section inférieure (406) du réacteur (404).

6. Réacteur (404) de la revendication 5, dans lequel le tuyau a une section transversale essentiellement circulaire.

7. Réacteur (404) de l'une quelconque des revendications précédentes, comprenant en outre une paroi extérieure (414) qui est aussi une paroi extérieure du deuxième canal (402).

8. Réacteur (404) de la revendication 7, dans lequel la paroi extérieure (414) comprend une section tubulaire (415) ayant une section transversale essentiellement circulaire.

9. Réacteur (404) de la revendication 8 comprenant un tuyau selon la revendication 5 ou 6, le tuyau et la section tubulaire (415) étant concentriques.

10. Réacteur (404) de la revendication 8 ou 9, dans lequel la paroi extérieure a trois sections principales :
la section tubulaire (415) ; une section inférieure de paroi au-dessous de la section tubulaire (415) au niveau de la section inférieure (406) du réacteur (404) ; et
une section supérieure de paroi au-dessus de la section tubulaire (415) au niveau de la section supérieure (405) du réacteur (404).

11. Réacteur (404) de la revendication 10, dans lequel la section inférieure de paroi et/ou la section supérieure de paroi est/sont façonnée(s) comme un cône, un cône tronqué ou une demi-sphère.

12. Réacteur (404) de l'une quelconque des revendications précédentes, comprenant en outre une sortie de gaz (416) disposée au niveau de la section supérieure (405) du réacteur (404) pour que des gaz formés dans le réacteur puissent être purgés.

13. Réacteur (404) de l'une quelconque des revendications précédentes, qui est conçu pour traiter de la boue ayant une température de 200-250 °C et une pression de 15-50 bar.

14. Conteneur adapté pour être transporté par un camion, lequel conteneur comprend un système (100) de traitement de boue, lequel système est disposé dans le conteneur et comprend :
une entrée de boue (102a) destinée à recevoir une boue ;
un réacteur vertical continu (404) selon l'une quelconque des revendications 1 à 13 comprenant un agencement (110) pour le traitement thermique de la boue, lequel réacteur (404) est disposé en aval de l'entrée de boue (102a) ;
un agencement (114, 207) destiné à refroidir la boue traitée dans le réacteur, lequel agencement (114, 207) est disposé en aval du réacteur (404) ; et
un agencement de séparation destiné à séparer la boue refroidie en une première fraction et une deuxième fraction, la teneur en matières solides en suspension étant plus grande dans la première fraction que dans la deuxième fraction.

15. Procédé de traitement de boue, lequel procédé est réalisé dans un conteneur adapté pour être transporté par un camion et comprend :
le préchauffage d'une boue pour obtenir une boue préchauffée ;
le chauffage supplémentaire de la boue préchauffée jusqu'à une température de 150-250 °C au moyen d'un réacteur vertical continu (404) selon la revendication 1 pour obtenir une boue traitée thermiquement ;
le refroidissement de la boue traitée thermiquement pour obtenir une boue refroidie ;
la séparation de la boue refroidie en une première fraction et une deuxième fraction, la teneur en matières solides en suspension étant plus grande dans la première fraction que dans la deuxième fraction.
